**Europäisches Patentamt**

**European Patent Office**

**Office européen des brevets**

(19)

(11) Veröffentlichungsnummer : **0 561 761 A1**

(12) # EUROPÄISCHE PATENTANMELDUNG

(21) Anmeldenummer : **93890018.0**

(22) Anmeldetag : **16.02.93**

(51) Int. Cl.⁵ : **C08K 5/10,** C08L 21/00, B60C 1/00

(30) Priorität : **17.03.92 AT 536/92**

(43) Veröffentlichungstag der Anmeldung :
**22.09.93 Patentblatt 93/38**

(84) Benannte Vertragsstaaten :
**AT DE FR GB IT LU**

(71) Anmelder : **Semperit Reifen Aktiengesellschaft Wienersdorferstrasse 20-24 A-2514 Traiskirchen (AT)**

(72) Erfinder : **Hausmann, Bernadette, Dr. Schneebergastrasse 33a A-2734 Puchberg (AT)**

(74) Vertreter : **Vinazzer, Edith et al Semperit Reifen Aktiengesellschaft Patentabteilung Wienersdorferstrasse 20-24 A-2514 Traiskirchen (AT)**

(54) **Kautschukmischung.**

(57) Kautschukmischung für Laufstreifen von Fahrzeugreifen für Personenkraftwagen mit einem Weichmacheranteil, welcher sich ausschließlich aus Öl zusammensetzt, das Triglyceride von Fettsäuren enthält. Nach der vorliegenden Erfindung enthält der Weichmacher Triglyceride von Fettsäuren mit einem Ölsäuregehalt > 50 %.

EP 0 561 761 A1

Die Erfindung betrifft eine Kautschukmischung für Laufstreifen von Fahrzeugreifen für Personenkraftwagen mit einem Weichmacheranteil, welcher sich ausschließlich aus Öl zusammensetzt, das Triglyceride von Fettsäuren enthält, sowie einen pneumatischen Fahrzeugreifen, dessen Laufstreifen aus dieser Kautschukmischung besteht.

Eine derartige Kautschukmischung ist aus Patent Abstract of Japan, Vol. 12, Nr. 252 (C-512) (3099), Nr. 63-39935 bekannt. Die dem Laufstreifen beigemengten Triglyceride werden synthetisch hergestellt und haben kurzkettige Acylgruppen.

Aus Patent Abstract of Japan, Vol. 13, Nr. 536 (C-660) (3884), Nr. 1-221441 ist es ferner bekannt, der Kautschukmischung für den Laufstreifen von Reifen Holzöl (Tung-Öl) beizumengen. Holzöl ist ein natürliches pflanzliches Öl, welches zu etwa 50 % in den Fruchtkernen von Bäumen verschiedener Aleuritis-Arten enthalten ist. Gemäß Seite 232 aus Ullmann's Encyclopedia of Industrial Chemistry, Volume A10, 1987, enthält Holzöl etwa 80 % Eleostearinsäure, 4 % Linolsäure, 3 % Linolensäure, 8 % Ölsäure, 1 % Stearinsäure und 4 % Palmitinsäure.

Kautschukmischungen für Laufstreifen von Reifen enthalten eine Vielzahl von Stoffen, welche der Mischung und dem fertigen Fahrzeugreifen bestimmte Eigenschaften verleihen. Zu diesen Inhaltsstoffen zählen insbesondere Polymere bzw. Elastomere, Füllstoffe, Weichmacher, Kohlenwasserstoffe und Ester sowie Alterungsschutzmittel und Vernetzungssysteme. Polymere bestimmen die Traktionseigenschaften des Reifens. Füllstoffe beeinflussen im Vulkanisat vor allem die Härte, die Festigkeit und die Dehnung. Weichmacher sind insbesondere niedermolekulare, überwiegend flüssige Stoffe auf Basis von Kohlenwasserstoffen oder Estern und werden dem Polymer-Füllstoff-Gemisch zugesetzt. Sie verbessern das Verarbeitungsverhalten und beeinflussen das Eigenschaftsbild der Vulkanisate, z.B. Festigkeit, Härte, Dehnung und Dämpfungsverhalten. Alterungsschutzmittel dienen der Verbesserung der Hitze-, der Witterungs- und der Ozonbeständigkeit von Vulkanisaten. Die Vernetzungssysteme bewirken die chemische Umwandlung des unvernetzten Rohpolymers unter Druck und Temperatur in den eigentlichen Werkstoff. Zu den Vernetzungssystemen zählen Schwefel und Vulkanisationsbeschleuniger in Verbindung mit Metalloxiden.

Die genannten Inhaltsstoffe erfüllen in technischer Hinsicht zwar die gestellten Anforderungen, einige von ihnen lassen aber in Bezug auf Umweltverträglichkeit zu wünschen übrig. Das gilt insbesondere für die aromatischen Weichmacher, welche polyzyklische Aromaten enthalten, die beim Menschen als krebserregend gelten. Der wesentliche technologische Zweck der Zugabe von Weichmachern ist darin zu sehen, daß sie der rohen Kautschukmischung eine verbesserte Verarbeitbarkeit z. B. Klebrigkeit verleihen. Ferner beeinflussen sie das Dämpfungs- und das Naßhaftverhalten des Reifens. Auch Vernetzungssysteme auf Sulfenamid-Basis sind bedenklich, insbesondere wenn sie zur Bildung von Nitrosomorpholin neigen.

Seitens der Hersteller von Kautschukmischungen besteht das Bestreben, für Fahrzeugreifen möglichst auf solche Inhaltsstoffe auszuweichen, welche eine gute Umweltverträglichkeit aufweisen und auch sonst unbedenklich sind. Bei der Wahl alternativer Inhaltsstoffe muß jedoch beachtet werden, daß sich die technischen Eigenschaften des Reifens nicht verschlechtern, da der Reifen naturgemäß für den sicheren Betrieb eines PKWs (z. B. für das Bremssystem) eine wichtige und sicherheitsrelevante Rolle spielt. Weiters muß bei der Entwicklung neuer Kautschukmischungen auf eine Wiederverwertbarkeit der gebrauchten Reifen geachtet werden und zweckmäßigerweise sollte bei der Herstellung altes Reifenmaterial eingesetzt werden können.

Es ist somit Aufgabe der vorliegenden Erfindung, eine Kautschukmischung für Laufstreifen für Fahrzeugreifen für PKW zur Verfügung zu stellen, die die genannten Anforderungen erfüllt.

Die erfindungsgemäße Kautschukmischung ist dadurch gekennzeichnet, daß der Weichmacher Triglyceride von Fettsäuren mit einem Ölsäuregehalt > 50 % enthält. Es hat sich gezeigt, daß, auch wenn solche Triglyceride nur einen Teil des Weichmachers ausmachen, eine deutliche Verbesserung der Laufstreifeneigenschaften erzielt werden kann.

Dabei hat sich herausgestellt, daß die genannten Triglyceride eine deutliche Verringerung der Steifigkeiten (Shore Härte, dynamischer Speichermodul E') bei tiefen Temperaturen (unter 0° C) bewirken, ohne daß etwa der Skidwiderstand auf trockenem oder nassem Untergrund (British Pendulum Skid Tester BPST) abgesenkt würde. Anhand von durchgeführten Reifenprüfungen hat sich eine Verbesserung aller Disziplinen herausgestellt. Vor allem sind die Wintereigenschaften, wie Traktionsvermögen auf Schnee sowie Eishaftung gemäß der Erfindung deutlich angestiegen. Weiters ist auch das Haftniveau auf nasser Fahrbahn mit einem erfindungsgemäß ausgebildeten Reifen deutlich höher als bei konventionellen Reifen, wobei gleichzeitig ein gutes Fahrverhalten bei abgesenktem Rollwiderstand beobachtet wurde.

Gemäß einer bevorzugten Ausgestaltung der Erfindung ist vorgesehen, daß diese Triglyceride einen Linolsäureanteil mit einem Ölsäure/Linolsäure-Verhältnis $\geqq$ 2 : 1 aufweisen. Mit einem derartigen Fettsäurespektrum wurden beste Ergebnisse erzielt.

Besonders bevorzugt im letztgenannten Zusammenhang ist eine weitere Ausgestaltung der Erfindung, gemäß welcher der Triglycerid-Anteil zumindest zum Teil aus natürlichem Rapsöl besteht. Beste Ergebnisse wur-

2

den beispielsweise mit einem "Rapsöl roh, entwässert, Ölmühle Bruck/Leitha" erzielt, welches einen Ölsäuregehalt > 53 % sowie ein Ölsäure/Linolsäureverhältnis von 2 : 1 bei Vorhandensein geringer Erucasäuremengen aufweist. Rapsöl ist darüber hinaus toxikologisch unbedenklich, umweltverträglich und preisgünstig, sodaß für die erwähnte Verbesserung der Reifeneigenschaften keine diesbezüglichen Nachteile in Kauf genommen werden müssen.

Der Rapsölanteil beträgt nach einer bevorzugten weiteren Ausbildung der Erfindung - bezogen auf 100 Gewichtsteile Kautschuk in der Laufstreifenmischung - 2 bis 45 Gewichtsteile, wobei ein Rapsölanteil von 15 bis 30 Gewichtsteile besonders bevorzugt ist.

Die Kautschukmischung selbst, die das Rapsöl enthält, kann darüber hinaus mindestens ein Polymer der Gruppe: Naturkautschuk, Polyisoprenkautschuk, cis- oder vinyl-Polybutadien-Kautschuk, Styrolbutadien-Kautschuk (SBR), oder Gemische aus diesen enthalten, wobei auch Zusätze von Butyl-Kautschuk, Halobutyl-Kautschuk oder 3, 4 IR (3, 4 Isopren-Kautschuk) möglich sind. Weiters können ohne Einschränkungen auch die üblichen Mengen an Füllstoffen, Alterungsschutzmitteln, Vulkanisationschemikalien, Zink Oxyd, Stearinsäure, Verarbeitungshilfsmitteln, und dergleichen vorgesehen sein.

Eine weitere Ausgestaltung der erfindungsgemäßen Kautschukmischung ist dadurch gekennzeichnet, daß sie oberflächenaktiviertes Gummimehl enthält, wobei vorteilhaft das Gummimehl von Abschälungen von Laufflächenmaterialien eines Lastkraftwagens (LKW) oder eines "Earth-mover"-Fahrzeuges (z. B. Bagger) stammt. Auf diese Weise ist es möglich, Teile von gebrauchten LKW-Reifen wiederzuverwerten. Es hat sich als zweckmäßig erwiesen, ein Gummimehl einzusetzen, dessen Oberflächenaktivierung durch Aufbringen einer Latex-Beschichtung enthaltend ein Vulkanisationssystem vorgenommen wird. In der erfindungsgemäßen Kautschukmischung ist das Gummimehl am besten in einer Menge zwischen 10 und 40 phr, bezogen auf 100 phr Kautschukmischung, enthalten.

Es ist auch möglich, der erfindungsgemäßen Kautschukmischung Butylkautschuk-Regenerat und zwar insbesondere in einer Menge zwischen 5 und 25 phr beizumischen.

Die erfindungsgemäße Kautschukmischung kann auf herkömmliche Weise zur Herstellung der Laufstreifen von Fahrzeugreifen für PKW verwendet werden.

In Tabelle 1 sind einige Beispiele für Kautschukmischungen angegeben, wobei die Mischungen 1 und 2 bekannt sind und zur Herstellung von Laufflächen für Sommer- bzw. Winterreifen verwendet werden. Die Mischungen 3 und 4 sind erfindungsgemäß und eignen sich ebenfalls für Sommer- bzw. Winterreifen. In Mischung 4 sind noch zusätzlich 15 Gewichtsteile Butylregenerat mit einem Polymeranteil von 10 phr und 30 Gewichtsteile oberflächenaktiviertes Gummimehl von wiederverwerteten LKW-Laufstreifen enthalten.

EP 0 561 761 A1

TABELLE 1

| Inhaltsstoff | Mischung 1 | Mischung 2 | Mischung 3 | Mischung 4 |
|---|---|---|---|---|
| Naturkautschuk | 0 | 70 | 0 | 70 |
| Emulsions-SBR | 100 | 0 | 0 | 0 |
| Lösungs-SBR | 0 | 0 | 100 | 0 |
| BR | 0 | 30 | 0 | 20 |
| Butylregenerat | 0 | 0 | 0 | 15 |
| Gummimehl (aktiviert) | 0 | 0 | 0 | 30 |
| Mineralöl-hocharomat. | 36 | 30 | 0 | 0 |
| Mineralöl-naphtenisch | 0 | 20 | 0 | 0 |
| Rapsöl | 0 | 0 | 30 | 25 |
| Ruß | 75 | 80 | 70 | 65 |
| Alterungsschutzmittel | 2 | 2 | 2 | 2 |
| Lichtschutzwachs | 1 | 1 | 1 | 1 |
| Stearinsäure | 2 | 2 | 2 | 2 |
| ZnO | 3 | 3 | 3 | 3 |
| MBS | 1,5 | 1,5 | 0 | 0 |
| OTOS | 0 | 1 | 0 | 0 |
| CBS | 0 | 0 | 1,2 | 0 |
| TBBS | 0 | 0 | 0 | 1 |
| S | 2 | 2,5 | 2 | 2 |

BR: Polybutadien-Rubber
SBR: Styrol-Butadien-Rubber
MBS: Benzothiazyl-2-sulfenmorpholid
OTOS: N-Oxydiethylendithio-carbamoyl-N'-oxydiethylensulfenamid
CBS: Benzothiazyl-2-cyclohexylsulfenamid
TBBS: Benzothiazyl-2-tert.-butylsulfenamid
S: Schwefel

In Tabelle 2 sind die physikalischen Daten der in Tabelle 1 angegebenen Kautschukmischungen angegeben. Es ist ersichtlich, daß die erfindungsgemäßen Mischungen den bekannten hinsichtlich Härte, Festigkeit, Spannungswert und Rückprallelastizität gleichwertig sind.

4

TABELLE 2

| | Mischung 1 | Mischung 2 | Mischung 3 | Mischung 4 |
|---|---|---|---|---|
| Festigkeit (MPa) | 16 | 14 | 14 | 14 |
| Spannungswert bei 50 % Dehnung (MPa) | 1,2 | 1,0 | 1,1 | 1,1 |
| Shore Härte Skt. (Raumtemperatur) | 66 | 60 | 65 | 60 |
| Shore Härte (70°C) | 58 | 56 | 56 | 55 |
| Shore Härte (-10°C) | 78 | 68 | 75 | 66 |
| Rückprallelastizität % (Raumtemperatur) | 24 | 35 | 26 | 37 |
| Rückpr. (70°C) | 37 | 44 | 39 | 46 |

## Patentansprüche

1. Kautschukmischung für Laufstreifen von Fahrzeugreifen für Personenkraftwagen mit einem Weichmacheranteil, welcher sich ausschließlich aus Öl zusammensetzt, das Triglyceride von Fettsäuren enthält, dadurch gekennzeichnet, daß der Weichmacher Triglyceride von Fettsäuren mit einem Ölsäuregehalt > 50 % enthält.

2. Kautschukmischung nach Anspruch 1, dadurch gekennzeichnet, daß diese Triglyceride einen Linolsäureanteil mit einem Ölsäure/Linolsäure-Verhältnis $\geqq$ 2 : 1 aufweisen.

3. Kautschukmischung nach Anspruch 1 oder 2, dadurch gekennzeichnet, daß der Triglycerid-Anteil zumindest zum Teil von einem natürlichen pflanzlichen Öl, insbesondere von Rapsöl, stammt.

4. Kautschukmischung nach Anspruch 3, dadurch gekennzeichnet, daß der Rapsölanteil - bezogen auf 100 Gewichtsteile Kautschuk - 2 bis 45 Gewichtsteile beträgt.

5. Kautschukmischung nach Anspruch 4, dadurch gekennzeichnet, daß der Rapsölanteil 15 bis 30 Gewichtsteile beträgt.

6. Kautschukmischung nach einem oder mehreren der Ansprüche 1 bis 5, dadurch gekennzeichnet, daß sie oberflächenaktiviertes Gummimehl enthält.

7. Kautschukmischung nach Anspruch 6, dadurch gekennzeichnet, daß Gummimehl eingesetzt wird, dessen Oberflächenaktivierung durch Aufbringen einer Latex-Beschichtung enthaltend ein Vulkanisationssystem vorgenommen wird.

8. Kautschukmischung nach Anspruch 6 oder Anspruch 7, dadurch gekennzeichnet, daß das Gummimehl von Abschälungen von Laufflächenmaterialien eines Lastkraftwagens oder "Earth-mover"-Fahrzeuges stammt.

9. Kautschukmischung nach den Ansprüchen 6 bis 8, dadurch gekennzeichnet, daß das Gummimehl in der Kautschukmischung in einer Menge zwischen 10 und 40 phr, bezogen auf 100 phr Kautschukmischung, enthalten ist.

10. Kautschukmischung nach einem oder mehreren der Ansprüche 1 bis 9, dadurch gekennzeichnet, daß sie Butylkautschuk-Regenerat, insbesondere in einer Menge zwischen 5 und 25 phr, enthält.

11. Pneumatischer Fahrzeugreifen, dessen Laufstreifen aus einer Kautschukmischung besteht, dadurch gekennzeichnet, daß als Kautschukmischung ausschließlich eine gemäß den Ansprüchen 1 bis 10 vorliegt.

12. Verwendung einer Kautschukmischung nach einem oder mehreren der Ansprüche 1 bis 10 zur Herstellung von Fahrzeugreifen für Personenkraftwagen.

EP 0 561 761 A1

| Europäisches Patentamt | EUROPÄISCHER RECHERCHENBERICHT | Nummer der Anmeldung EP    93 89 0018 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 524 164 (SEMPERIT REIFEN AG)<br><br>* Ansprüche 1-5 *<br>--- | 1-5, 11-12 | C08K5/10<br>C08L21/00<br>B60C1/00 |
| D,A | DATABASE WPIL<br>Section Ch, Week 8941,<br>Derwent Publications Ltd., London, GB;<br>Class A, AN 89-297870 [41]<br>& JP-A-1 221 441 (TOYO RUBBER IND KK) 4. September 1989<br>* Zusammenfassung *<br>--- | 1 | |
| A | GB-A-1 158 334 (MONSANTO COMPANY)<br>* Seite 4, Zeile 36; Anspruch 12 *<br>--- | 1-3 | |
| A | WO-A-8 802 313 (RUBBER RESEARCH ELASTOMERICS)<br>* Anspruch 1 *<br><br>----- | 6 | |
| | | | RECHERCHIERTE SACHGEBIETE (Int. Cl.5)<br><br>C08K<br>C08L<br>B60C |

Der vorliegende Recherchenbericht wurde für alle Patentansprüche erstellt

| Recherchenort DEN HAAG | Abschlußdatum der Recherche 21 JUNI 1993 | Prüfer VAN HUMBEECK F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

7